# FASCICULE DE BREVET EUROPEEN

(11) **EP 0 890 752 B1**
(45) Date de publication et mention de la délivrance du brevet: **17.02.2010**
(21) Numéro de dépôt: 98402514.8
(22) Date de dépôt: 17.12.1993
(51) Int. Cl.: F16C 19/52, G01P 3/44

(54) **Ensemble à joint d'étanchéité à codeur incorporé; roulement ou palier comportant un tel ensemble à joint d'étanchéité**
Dichtungsanordnung mit integriertem Codierer; Lager mit einer solchen Dichtungsanordnung
Sealing arrangement with integrated encoder; bearing including such a sealing arrangement

(30) Priorité: 19.01.1993 FR 9300458
(43) Date de publication de la demande: 13.01.1999
(62) Demande divisionnaire de: 93403068.5
(73) Titulaire: S.N.R. ROULEMENTS, F-74010 Annecy Cedex (FR)
(72) Inventeur: Hajzler, Christian, 74330 Poisy (FR)
(74) Mandataire: Derambure, Christian

(56) Documents cités:
- EP-A- 0 371 836
- EP-A- 0 378 939
- EP-A- 0 495 323
- DE-A- 3 735 070
- DE-A- 3 809 904
- FR-A- 2 574 501
- US-A- 4 171 818
- PATENT ABSTRACTS OF JAPAN vol. 013, no. 194 (M-823), 10 mai 1989 (1989-05-10) & JP 01 021219 A (NIPPON SEIKO KK), 24 janvier 1989 (1989-01-24)

## Description

L'invention concerne une combinaison de supports et d'un ensemble à joint d'étanchéité à codeur incorporé dans lequel un disque tournant porte ledit codeur à aimantation multipolaire pour générer un champ magnétique apte à se déplacer devant un capteur fixe.

La publication EP-A-495323 décrit un joint d'étanchéité qui possède un déflecteur tournant recouvert ou réalisé en un matériau aimanté.

Lorsque le fonctionnement du capteur nécessite un champ magnétique important, l'encombrement axial du codeur doit être augmenté. Selon la publication FR-A-2 660 975 la face intérieure du disque tournant est orientée vers la garniture d'étanchéité, tandis que la face extérieure du disque porte le codeur. La dimension axiale globale d'un tel joint ne permet plus la réalisation de roulements ou de paliers étanches dont l'encombrement axial est déterminé à l'avance.

La figure 5 du document EP-A-495 323 représente un roulement à capteur d'informations ayant une bague fixe et une bague tournante. Sur la bague fixe est montée une armature fixe et sur la bague mobile est montée une armature mobile. Les deux armatures délimitent axialement entre elles une chambre annulaire. L'armature mobile comporte un disque garni d'une nervure d'étanchéité destinée au montage dans une gorge annulaire de la bague mobile. Dans cette réalisation, le capteur d'informations est monté sur la bague fixe du roulement avec un collier de fixation.

Le document FR-A-2574501 concerne également un roulement à capteur d'informations intégré. Il est prévu, s'agissant du codeur, qu'il peut être formé à partir d'une feuille d'acier à faible teneur en carbone ferro-magnétique revêtue d'une couche mince de ferrite et de liant polymérisé.

L'invention a pour objet un roulement et un palier étanche dans lequel la position axiale du joint d'étanchéité demeure sans effet sur la dimension globale dudit roulement ou palier.

L'invention a également pour objet un roulement et un palier dont l'étanchéité est améliorée au niveau des liaisons du joint avec les éléments fixe et mobile dudit roulement ou palier.

L'invention a encore pour objet une combinaison de supports et d'un ensemble à joint d'étanchéité à codeur incorporé compact comportant une garniture d'étanchéité à lèvres souples, dont le codeur peut être aisément fabriqué à partir d'un élastomère chargé de particules de ferrite.

Selon l'invention , il est proposé un ensemble à joint d'étanchéité à codeur incorporé en combinaison avec des supports:
- ledit ensemble étant monté entre un support fixe et un support tournant, faisant partie d'un roulement ou d'un palier ;
- cet ensemble comportant une armature fixe et une armature mobile délimitant axialement entre elles une chambre annulaire ;
- l'armature fixe étant solidarisée au support fixe ;
- l'armature mobile comportant un disque et étant solidarisée au support tournant;
- l'ensemble comportant un moyen d'étanchéité fixé à l'armature mobile en appui sur le support tournant ;
- le disque supportant un élément codeur magnétique formé par un élastomère chargé de particules magnétique qui, recouvre la face extérieure du disque,
caractérisé par le fait que :
- le disque comprend une première et une seconde paroi décalée axialement vers l'extérieur par rapport à la première paroi, la seconde paroi étant adjacente à la nervure d'étanchéité et de montage ;
- la face extérieure de l'élément codeur magnétique est sensiblement contenue dans le plan d'une face latérale d'au moins un des dits supports ;
- le codeur possède un volume suffisant pour que le champ magnétique qu'il engendre puisse être aisément lu par un capteur.

L'ensemble à joint d'étanchéité ainsi réalisé en combinaison avec des supports possède l'avantage de pouvoir être monté de façon étanche dans un roulement sans précautions particulières.

D'autres caractéristiques et avantage de l'invention apparaîtront à la lecture de la description d'exemples de réalisations des ensembles joint/codeur en référence au dessin annexé dans lequel
- la figure 1 est une vue en coupe radiale d'un ensemble à joint d'étanchéité à codeur incorporé monté entre un arbre tournant et un carter fixe ;
- la figure 2 représente une variante de réalisation de l'ensemble représenté à la figure 1 ;
- la figure 3 est une vue en coupe radiale d'un ensemble à joint d'étanchéité à codeur incorporé monté avec une nervure d'encastrement de l'ensemble entre deux bagues extérieure et intérieure d'un roulement selon une variante des figures 1 et 2 ;
- la figue 4 représente une première variante de réalisation de la figure 3 ;
- la figure 5 représente une deuxième variante de réalisation de la figure 3.

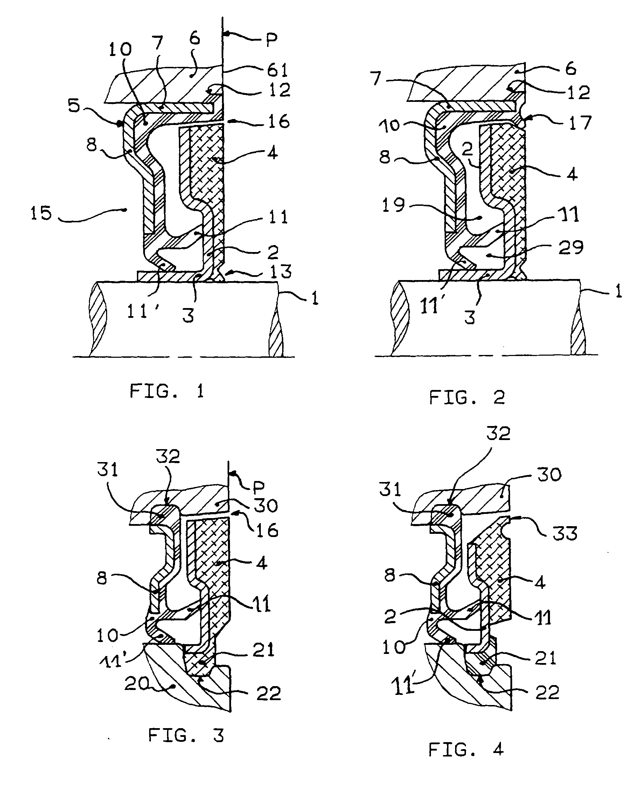

Ainsi que cela est montré à la figure 1 et 2 un arbre support tournant 1 porte un disque radial 2 solidaire d'une portée cylindrique 3 emmanchée sur l'arbre 1. Une face du disque 2 est recouverte par un élastomère chargé de particules magnétiques qui constitue l'élément codeur 4.

Le disque 2 et sa portée cylindrique 3 constituent conjointement une armature intérieure localisée dans une armature extérieure fixe 5 montée sur un support 6. L'armature extérieure fixe 5 possède également une portée de montage 7 encastrée dans le support 6 et un disque radial fixe 8 orienté vers l'axe de rotation de l'arbre 1.

Le disque 8 porte un revêtement élastomère 10 d'étanchéité surmoulé qui possède ici une lèvre axiale 11 et une lèvre radiale 11' respectivement en appui sur la face libre du disque 2 et sur la surface extérieure de la portée 3. La limite du revêtement 10 raccordée à la porte de montage 7 possède une nervure circulaire 12 encastrée dans un lamage ou sur un chanfrein du support 6.

Selon l'invention, la surface latérale extérieure de l'élément codeur 4 est raccordée à une lèvre radiale d'étanchéité 13 fixée au disque 2 et en appui sur l'arbre 1 et est sensiblement confondue avec le plan p de la face latérale 61 du support 6.

L'ensemble des disques 2, 8 munis de leurs revêtements 4, 10 est monté dans une cavité annulaire 15 axialement limitée par le plan p.

Selon une caractéristique du montage représenté à la figure 1, la surface périphérique de l'ensemble constitué par le disque 2 et par l'élément codeur 4 est radialement séparée du revêtement élastomère 10 par un interstice 16.

Par ailleurs, la surface périphérique de l'ensemble disque 2-codeur 4 peut être encastrée sous une lèvre d'étanchéité 17 fixe portée par le revêtement 10 et au contact de l'élément codeur tournant 4 ainsi que cela est représenté à la figure 2.

Par ailleurs, les disques 2, 8 délimitent des cavités annulaires 19, 29 remplies d'un liquide magnétique maintenu en place par le magnétisme de l'élément codeur 4. Ce liquide peut également être contenu dans l'interstice 16. La présence du liquide chargé de ferrite améliore de la sorte l'étanchéité du joint.

Le disque 2 peut également être réalisé en matériau magnétique dans le but d'assurer une concentration du champ et du flux magnétique émis par l'élément codeur 4.

Les figures 3 et 4 représentent une variante de montage de l'ensemble joint d'étanchéité/codeur représenté aux figures 1 et 2. Les éléments et organes du montage représentés aux figures 3 et 4 dont la fonction est en correspondance avec les éléments et organes représentés aux figures 1 et 2 portent de ce fait les mêmes indices.

Le joint d'étanchéité représenté est monté dans une cavité délimitée entre les bagues support, intérieure tournante 20 et extérieure fixe 30 d'un roulement à éléments roulants. A cet effet l'élément codeur 4 du disque 2 est limité radialement sur son diamètre intérieur par une nervure d'étanchéité annulaire 21 destinée au montage de l'élément codeur 4 dans une gorge annulaire 22 de la bague intérieure 20. D'une manière analogue, le revêtement élastomère 10 du disque 8 est limité radialement sur son diamètre extérieur par une nervure d'étanchéité annulaire 31 destinée au montage du disque 8 dans une gorge annulaire 32 de la bague extérieure 30.

On désignera ci-après plus généralement par la référence 20, le support tournant de l'élément codeur 4 et par la référence 30, le support éventuel d'un élément fixe du joint d'étanchéité.

Dans les montages précités la face latérale extérieure du codeur 4 est sensiblement confondue avec le plan p de la face latérale de la bague 30 support du disque 8.

Selon la figure 3, la surface périphérique de l'ensemble disque codeur 2, 4 est limitée radialement par un intervalle 16 de séparation avec la bague extérieure 30 du roulement.

Selon la figure 4, la dimension axiale de l'interstice 16 est limité par une lèvre 33 qui prolonge radialement vers l'extérieur la matière constitutive du codeur 4.

Par ailleurs, la nervure d'étanchéité annulaire 21 est constituée par un élastomère non chargé de ferrite.

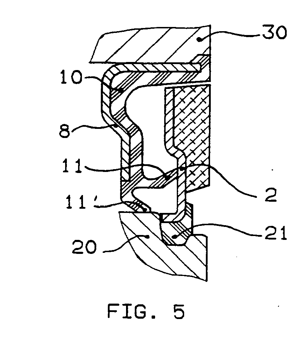

La figure 5 décrit un ensemble à joint d'étanchéité à codeur incorporé
dans lequel le disque 2 porteur du codeur correspond à la structure décrite en référence à la figure 3 et dans laquelle la nervure d'étanchéité annulaire 21 est constituée par un élastomère non chargé de ferrite.

Dans le montage précité le disque 8 porteur du revêtement élastomère 10 à lèvres d'étanchéité 11, 11' correspond à la structure décrite en référence à la figure 1 et dans laquelle la lèvre radiale 11' est en appui par exemple sur la bague 20 tournante intérieure d'un roulement.

## Revendications

1. Ensemble à joint d'étanchéité à codeur incorporé en combinaison avec des supports:
- ledit joint étant monté entre un support fixe (30,6) et un support tournant (20), faisant partie d'un roulement ou d'un palier ;
- cet ensemble comportant une armature fixe (5) et une armature mobile délimitant axialement entre elles une chambre annulaire (19) ;
- l'armature fixe (5) étant solidarisée au support fixe (30) ;
- l'armature mobile comportant un disque (2) et étant solidarisée au support tournant (20,1);
- l'ensemble comportant un moyen d'étanchéité (13, 21) fixé à l'armature mobile (5) en appui sur le support tournant (20) ;
- le disque (2) supportant un élément codeur magnétique (4) formé par un élastomère chargé de particules magnétiques qui recouvre la face extérieure du disque,
**caractérisé par le fait que** :
- le disque (2) comprend une première et une seconde paroi décalée axialement vers l'extérieur par rapport à la première paroi, la seconde paroi étant adjacente au support tournant (20) ;
- la face extérieure de l'élément codeur magnétique (4) est sensiblement contenue dans le plan (P) d'une face latérale d'au moins un des dits supports (20, 1, 30, 6);
- le codeur (4) possède un volume suffisant pour que le champ magnétique qu'il engendre puisse être aisément lu par un capteur.

2. Ensemble selon la revendication 1, **caractérisé par le fait que** la surface périphérique de l'ensemble disque (2) - codeur (4) est limitée radialement par un interstice (16).

3. Ensemble selon la revendication 2 **caractérisé par le fait que** l'interstice (16) est limité axialement par une lèvre (33) prolongeant radialement vers l'extérieur la matière constitutive du codeur (4).

4. Ensemble selon l'une quelconque des revendications 1 à 3, **caractérisé par le fait que** la surface périphérique de l'ensemble disque (2) - codeur (4) est encastrée sous une lèvre d'étanchéité (17), au contact du codeur (4) tournant.

5. Ensemble selon l'une quelconque des revendications 1 à 4, **caractérisé par le fait que** l'armature fixe (5) comporte un disque (8) et une portée de montage (7) destinée à être encastrée dans le support fixe (6).

6. Ensemble selon l'une quelconque des revendications 1 à 4, **caractérisé par le fait que** l'armature fixe (5) comporte un disque (8) garni radialement et à l'extérieur d'une nervure d'étanchéité (31) destinée au montage dans une gorge annulaire du support fixe (30).

7. Ensemble selon l'une quelconque des revendications 1 à 6, **caractérisé par le fait que** le disque fixe (8) de l'armature fixe (5) porte un revêtement élastomère (10) d'étanchéité surmoulé, ce revêtement comportant une lèvre axiale (11) et une lèvre radiale (11'), respectivement en appui sur la face libre interne du disque (2) et sur la portée (3) ou le support mobile (20).

8. Ensemble selon les revendications 4, 5 et 7, **caractérisé par le fait que** la limite du revêtement élastomère (10) raccordée à la portée de montage (7) possède une nervure circulaire (12) raccordée à la portée de montage (7) encastrée dans un lamage ou sur un chanfrein du support (6).

9. Ensemble selon l'une quelconque des revendications 1 à 8, **caractérisé par le fait qu'**au moins la cavité annulaire (19) contient un liquide magnétique.

10. Ensemble selon la revendication 2, **caractérisé par le fait que** l'interstice (16) de limitation de la surface périphérique de l'ensemble disque (2) - codeur (4) contient un liquide magnétique.

11. Ensemble selon l'une quelconque des revendications 1 à 10, **caractérisé par le fait que** le disque (2) possède une extension radiale en matériau magnétique pour la concentration du flux magnétique délivré par le dit codeur (4).

12. Ensemble selon l'une quelconque des revendications 1 à 11, **caractérisé par le fait que** les particules magnétiques présentes dans l'élastomère formant le codeur (4) sont en ferrite.

13. Ensemble selon l'une quelconque des revendications 1 à 12, **caractérisé en ce que** le disque (2) est garni d'une nervure d'étanchéité (21) montée dans une gorge annulaire (22) du support tournant (20).

## Claims

1. Assembly with a gasket with incorporated coder in combination with supports:
- the said gasket being mounted between a fixed support (30, 6) and a rotating support (20), forming part of a bearing or bearing housing;
- this assembly comprising a fixed frame (5) and a moving frame delimiting axially between them an annular chamber (19);
- the fixed frame (5) being secured to the fixed support (30);
- the moving frame comprising a disc (2) and being secured to the rotating support (20, 1);
- the assembly comprising a sealing means (13, 21) fixed to the moving frame (5) in abutment on the rotating support (20);
- the disc (2) supporting a magnetic coding element (4) formed by an elastomer containing magnetic particles that covers the external face of the disc,
**characterised by** the fact that:
- the disc (2) comprises a first wall and a second wall offset axially towards the outside with respect to the first wall, the second wall being adjacent to the rotating support (20);
- the external face of the magnetic coding element (4) is substantially contained in the plane (P) of a lateral face of at least one of the said supports (20, 1, 30, 6);
- the coder (4) has a sufficient volume for the magnetic field that it generates to be able to be read easily by a sensor.

2. Assembly according to claim 1, **characterised by** the fact that the peripheral surface of the assembly consisting of disc (2) and coder (3) is delimited radially by an interstice (16).

3. Assembly according to claim 2, **characterised by** the fact that the interstice (16) is delimited axially by a lip (33) extending the material constituting the coder (4) radially towards the outside.

4. Assembly according to any one of claims 1 to 3, **characterised by** the fact that the peripheral surface of the assembly consisting of disc (2) and coder (4) is embedded under a sealing lip (17), in contact with the rotating coder (4).

5. Assembly according to any one of claims 1 to 4, **characterised by** the fact that the fixed frame (5) comprises a disc (8) and a mounting surface (7) intended to be embedded in the fixed support (6).

6. Assembly according to any one of claims 1 to 4, **characterised by** the fact that the fixed frame (5) comprises a disc (8) provided radially and on the outside with a sealing rib (31) intended for mounting in an annular groove in the fixed support (30).

7. Assembly according to any one of claims 1 to 6, **characterised by** the fact that the fixed disc (8) of the fixed frame (5) carries an elastomer sealing covering (10) moulded on, this covering comprising an axial lip (11) and a radial lip (11'), respectively in abutment on the internal free face of the disc (2) and on the surface (3) or the moving support (20).

8. Assembly according to claims 4, 5 and 7, **characterised by** the fact that the limit of the elastomer covering (10) connected to the mounting surface (7) has a circular rib (12) connected to the mounting surface (7) embedded in a countersink or on a bevel on the support (6).

9. Assembly according to any one of claims 1 to 8, **characterised by** the fact that at least the annular cavity (19) contains a magnetic liquid.

10. Assembly according to claim 2, **characterised by** the fact that the interstice (16) delimiting the peripheral surface of the assembly consisting of disc (2) and coder (4) contains a magnetic liquid.

11. Assembly according to any one of claims 1 to 10, **characterised by** the fact that the disc (2) has a radial extension made from magnetic material for concentrating the magnetic flux delivered by the said coder (4).

12. Assembly according to any one of claims 1 to 11, **characterised by** the fact that the magnetic particles present in the elastomer forming the coder (4) and made from ferrite.

13. Assembly according to any one of claims 1 to 12, **characterised in that** the disc (2) is provided with a sealing rib (21) mounted in an annular groove (22) on the rotating support (20).

## Patentansprüche

1. Baugruppe mit Dichtung mit integriertem Codierer in Kombination mit Trägern:
- wobei die besagte Dichtung zwischen einem festen Träger (30, 6) und einem drehenden Träger (20) montiert ist, die Bestandteil eines Wälzlagers oder eines Lagers sind;
- wobei diese Baugruppe ein feststehende Gestell (5) und ein mobiles Gestell umfaßt, die axial untereinander eine ringförmige Kammer (19) abgrenzen;
- wobei as feststehende Gestell (5) mit dem feststehenden Träger (30) fest verbunden ist;
- wobei die mobile Bewehrung eine Scheibe (2) umfaßt und fest mit dem drehenden Träger (20, 1) verbunden ist;
- wobei die Baugruppe ein Dichtheitsmittel (13, 21) umfaßt, das an der mobilen Bewehrung (5) befestigt ist und auf dem drehenden Träger (20) aufliegt;
- wobei die Scheibe (2) ein magnetisches Codierelement (4) trägt, das aus einem mit magnetischen Teilchen versehenen Elastomer gebildet wird, das die Außenseite der Scheibe abdeckt,
**dadurch gekennzeichnet, daß:**
- die Scheibe (2) eine erste und eine zweite im Verhältnis zur ersten Wand axial nach außen verschobene Wand umfaßt, wobei die zweite Wand an den drehenden Träger (20) angrenzt;
- die Außenseite des magnetischen Codierelements (4) deutlich in der Ebene (P) einer Seitenfläche mindestens eines der besagten Träger (20, 1, 30, 6) enthalten ist;
- der Codierer (4) ein ausreichendes Volumen besitzt, damit das von ihm geschaffene Magnetfeld leicht von einer Sonde gelesen werden kann.

2. Baugruppe nach Anspruch 1, **dadurch gekennzeichnet, daß** die periphere Fläche der Baugruppe Scheibe (2) - Codierer (4) radial durch eine Lücke (16) begrenzt wird.

3. Baugruppe nach Anspruch 2, **dadurch gekennzeichnet, daß** die Lücke (16) axial durch eine Lippe (33) begrenzt wird, die den Werkstoff des Codierers (4) radial nach außen verlängert.

4. Baugruppe nach einem beliebigen der vorstehenden Ansprüche 1 bis 3, **dadurch gekennzeichnet, daß** die periphere Fläche der Baugruppe Scheibe (2) - Codierer (4) unter eine Dichtlippe (17) in Kontakt mit dem drehenden Codierer (4) eingelassen ist.

5. Baugruppe nach einem beliebigen der vorstehenden Ansprüche 1 bis 4, **dadurch gekennzeichnet, daß** die feststehende Bewehrung (5) eine Scheibe (8) und eine Montagefläche (7) umfaßt, die in den feststehenden Träger (6) eingelassen werden soll.

6. Baugruppe nach einem beliebigen der vorstehenden Ansprüche 1 bis 4, **dadurch gekennzeichnet, daß** die feststehende Bewehrung (5) eine Scheibe (8) umfaßt, die radial und außen mit einer Dichtrippe (31) versehen ist, die für die Montage in eine ringförmige Kehle des feststehenden Trägers (30) bestimmt ist.

7. Baugruppe nach einem beliebigen der vorstehenden Ansprüche 1 bis 6, **dadurch gekennzeichnet, daß** die feststehende Scheibe (8) der feststehenden Bewehrung (5) eine abgeformte Dichtungsverkleidung aus Elastomer (10) trägt, wobei diese Verkleidung eine axiale Lippe (11) und eine radiale Lippe (11') umfaßt, die auf der freien inneren Fläche der Scheibe (2) beziehungsweise auf der Fläche (3) oder dem mobilen Träger (20) aufliegen.

8. Baugruppe nach den Ansprüchen 4, 5 und 7, **dadurch gekennzeichnet, daß** die Grenze der an die Montagefläche (7) angeschlossene Elastomerverkleidung (10) eine kreisförmige Rippe (12) besitzt, die an die Montagefläche (7) angeschlossen ist, die in einer Senkung oder auf einer Fase des Trägers (8) eingelassen ist.

9. Baugruppe nach einem beliebigen der vorstehenden Ansprüche 1 bis 8, **dadurch gekennzeichnet, daß** zumindest die ringförmige Austiefung (19) eine magnetische Flüssigkeit enthält.

10. Baugruppe nach Anspruch 2, **dadurch gekennzeichnet, daß** die Lücke (16) der Begrenzung der peripheren Fläche der Baugruppe Scheibe (2) - Codierer (4) eine magnetische Flüssigkeit enthält.

11. Baugruppe nach einem beliebigen der vorstehenden Ansprüche 1 bis 10, **dadurch gekennzeichnet, daß** die Scheibe (2) eine radiale Verlängerung aus magnetischem Material für die Konzentrierung des vom besagten Codierer (4) abgegebenen magnetischen Flusses besitzt.

12. Baugruppe nach einem beliebigen der vorstehenden Ansprüche 1 bis 11, **dadurch gekennzeichnet, daß** die im Elastomer vorhandenen magnetischen Teilchen, das den Codierer (4) bildet, aus Ferrit sind.

13. Baugruppe nach einem beliebigen der vorstehenden Ansprüche 1 bis 12, **dadurch gekennzeichnet, daß** die Scheibe (2) mit einer Dichtrippe (21) versehen ist, die in eine ringförmige Kehle (22) des drehenden Trägers (20) montiert ist.
